# EUROPEAN PATENT SPECIFICATION

(11) **EP 2 590 080 B1**
(45) Date of publication and mention of the grant of the patent: **03.09.2014**
(21) Application number: 11187552.2
(22) Date of filing: 02.11.2011
(51) Int. Cl.: G06F 11/22, G06F 11/10

(54) **Error correction**
Fehlerkorrektur
Correction d'erreur

(43) Date of publication of application: 08.05.2013
(73) Proprietor: Renesas Electronics Europe Limited, Bourne End, Buckinghamshire SL8 5FH (GB)
(72) Inventor: Hoffleit, Thorsten, 40472 Duesseldorf (DE); Mardmoeller, Christian, 40472 Duesseldorf (DE); Vincelli, Riccardo, Bourne End, Buckinghamshire SL8 5FH (GB)
(74) Representative: Piotrowicz, Pawel Jan Andrzej

(56) References cited:
- EP-A2- 1 315 176
- US-A1- 2008 016 392
- US-A1- 2009 094 504
- US-B1- 6 988 237

## Description

The present invention relates to error correction.

Random access memory (RAM) is often provided with an error correction code (ECC) circuit. When data is written to RAM, the ECC circuit generates an ECC based on the data using an ECC polynomial. The data and the ECC are stored in RAM. When data is read from RAM, the integrity of the data is checked using the same ECC polynomial. The data is extracted and output. Depending on the complexity of the ECC polynomial used and the number of bits corrupted, corrupted data can be corrected.

US 6 988 237 B1 describes an integrated circuit comprising a memory and multiplexers which respond to an *EC Test* signal to use *EC Test Bits* and *Data Test Bits* instead of data bits and EC bits generated by an EC Input Circuit. The integrated circuit can be tested in a test system or in a built-in self test system. The invention is defined by the appended independent claim. According to the present invention there is provided apparatus, such as a microcontroller, comprising an error correction code (ECC) circuit comprising an ECC generation circuit operable to receive data, to generate an ECC in dependence upon the data and to output ECC data comprising the data and the ECC, wherein the ECC circuit is selectively operable to receive substitute ECC data and to output ECC data comprising the substitute ECC, and a data extraction circuit operable to receive ECC data comprising data and an ECC, to extract the data or corrected data from the ECC data and to output the data or corrected data, wherein the ECC circuit is selectively operable to receive ECC data and to output the ECC. The apparatus also comprise at least one central processing unit (CPU), an access circuit for controlling the ECC circuit which is a peripheral module and which is accessible by the CPU. The access circuit comprises a field for holding data to be written to memory, a field for holding a substitute ECC to be written to memory, a field for holding data to be read from memory and a field for holding an ECC read from memory. The fields are writable and readable by the CPU. The access circuit is configured to send the data and the substitute ECC to the ECC circuit and to instruct the ECC circuit to store the substitute ECC in memory and to send an instruction to the ECC circuit to send the data and the ECC to the access circuit. The apparatus also comprises at least one other peripheral module and a memory access arbitration circuit connected to the access circuit and the at least one other peripheral module. The arbitration circuit is configured to handle access scheduling and buffer data during read and write access.

Thus, testing of memory and/or the ECC circuit can be carried out *in-situ* during normal operation of the apparatus.

The ECC data may comprise a first portion comprising the data and a second portion comprising the ECC. The first and second portions of the ECC data may be concatenated. For example, the data may comprise the upper bits and the ECC may comprise the lower bits. The data may comprise a 32-bit word and the ECC may comprise 7 bits. The data and the ECC need not be separated into separate portions of the ECC data. Instead, the data and the ECC may be merged. The at least one further peripheral module may be, for example a timer module or controller area network (CAN) interface module.

The apparatus may conform to an in-vehicle networking standard, such as FlexRay.

The apparatus may be a microcontroller. The memory may be embedded in the microcontroller or may be external to the microcontroller.

Certain embodiments of the present invention will now be described, by way of example, with reference to the accompanying drawings, in which:
Figure 1 is a schematic block diagram of a microcontroller which includes an embedded peripheral RAM and an ECC circuit;
Figure 2 is a schematic block diagram of the ECC circuit shown in Figure 1;
Figure 2a illustrates an ECC generation process;
Figure 2b illustrates an ECC detection and correction process;
Figure 3 is a schematic block diagram of an embodiment of a microcontroller in accordance with the present invention which includes an embedded peripheral RAM, an ECC circuit and an access window circuit;
Figure 3a illustrates bypassing an ECC generation process;
Figure 3b illustrates bypassing an ECC detection and correction process;
Figure 4 is a schematic block diagram of the ECC logic circuit shown in Figure 3 and which includes an ECC extraction and correction circuit and an ECC generation circuit;
Figure 5 is a schematic block diagram of a data writing part of the ECC circuit shown in Figure 4;
Figure 6 is a schematic block diagram of a reading part of the ECC circuit shown in
Figure 4;

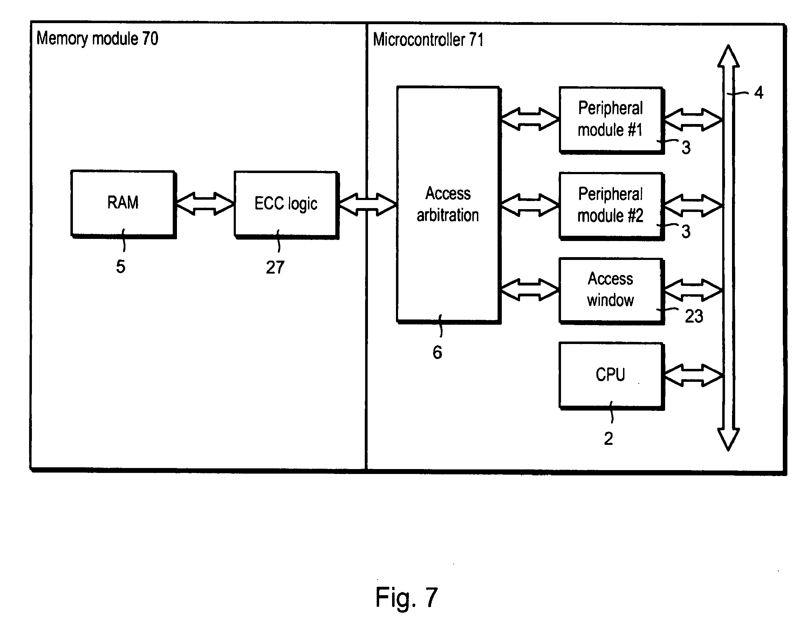

Figure 7 is a schematic block diagram of an embodiment of a microcontroller which includes an access window circuit, and a RAM module which includes peripheral RAM, an ECC circuit in accordance with the present invention;

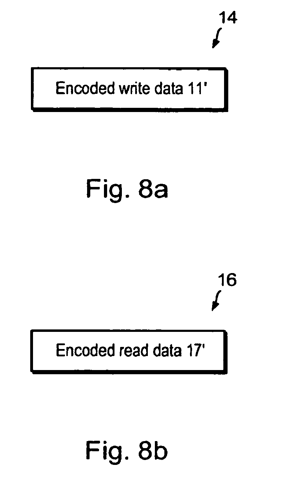

Figure 8a illustrates non-concatenated ECC write data; and
Figure 8b illustrates non-concatenated ECC read data.

In the following description, like parts are denoted by like reference numerals.

### Microcontroller 1

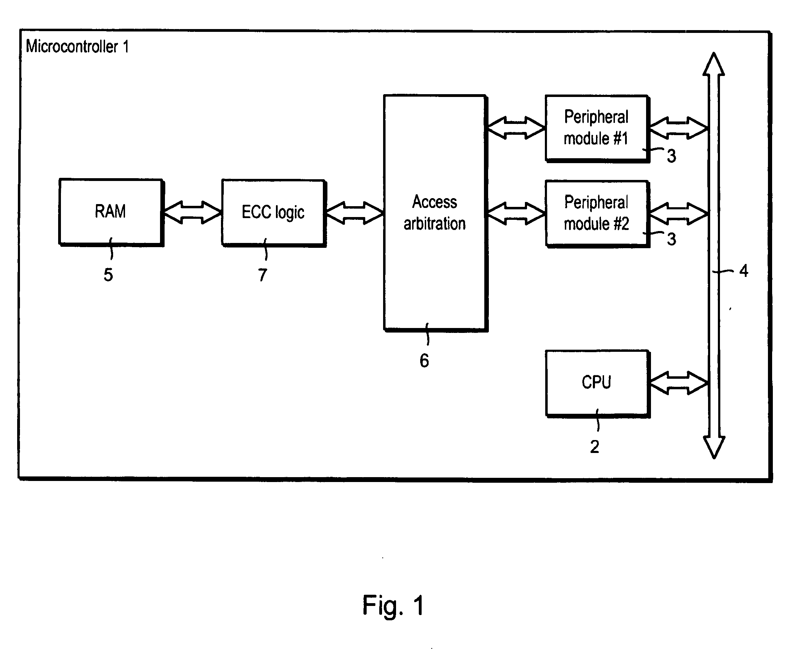

Figure 1 shows a microcontroller 1 having embedded, peripheral random access memory (RAM).

The microcontroller 1 includes at least one central processing unit (CPU) 2 and a plurality of peripheral modules 3 interconnected by a bus system 4 (herein also referred to as an "access interface"). Only one CPU 2 and two peripheral modules 3 are shown in Figure 1 for clarity. The peripheral modules 3 may include, for example, one or more timer modules, a serial input/output module, a communication network controller module and/or other types of peripheral modules.

The peripheral modules 3 can access an embedded, peripheral RAM module 5 (herein referred to simply as "peripheral RAM") via an access arbitration circuit 6. The access arbitration circuit 6 handles access scheduling and buffers data during read and write access.

As shown in Figure 1, the CPU 2 need not have direct access to the peripheral RAM 5. Nevertheless, the CPU 2 may still be able to control reading and writing of data to and from the peripheral RAM 5 via one or more of the peripheral modules 3. The CPU 2 and the peripheral module(s) 3 form a first master-slave system in which the CPU 2 is the master and the peripheral module(s) 3 is (are) slaves. The peripheral module(s) 3 and the peripheral RAM 5 form a second master-slave system in which the peripheral module(s) 3 is (are) masters and the peripheral RAM 5 is a slave.

Error correction codes (ECCs) can be used to detect and correct errors when reading and writing to and from the peripheral RAM 5. Accordingly, the microcontroller 1 includes an error correction code (ECC) circuit 7 (herein also referred to as "ECC logic" or "ECC circuit"). The ECC circuit 7 is implemented in hardware. In this example, the ECC circuit 7 is interposed between the peripheral RAM 5 and the access arbitration circuit 6.

The ECC circuit 7 can detect up to a given number of bit errors and correct up to a certain number of bit errors. The number of bit errors which can be corrected is usually less than the number of bit errors that can be detected. Typically, a 7-bit ECC is sufficient to protect a 32-bit data word. However, a longer or shorter ECC can be used. In addition to detecting and correcting errors and outputting read data, the ECC circuit 7 can also output status information about a current read access, for example, indicating successful read, read with corrected errors, or invalid read.

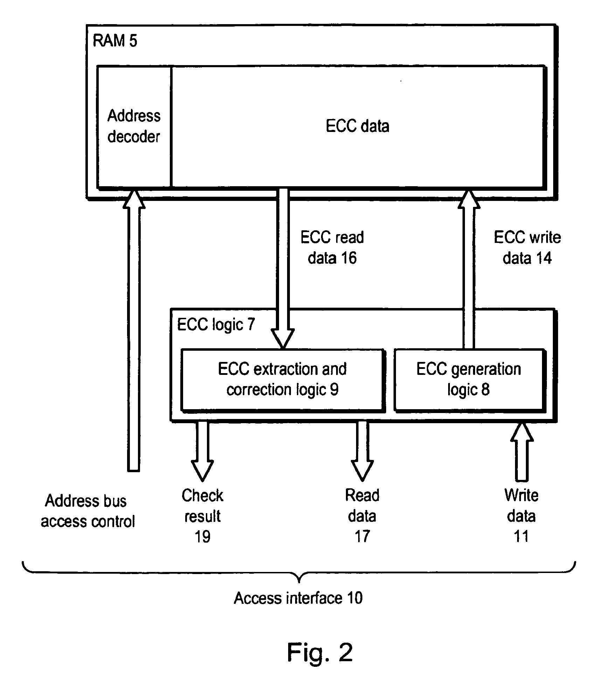

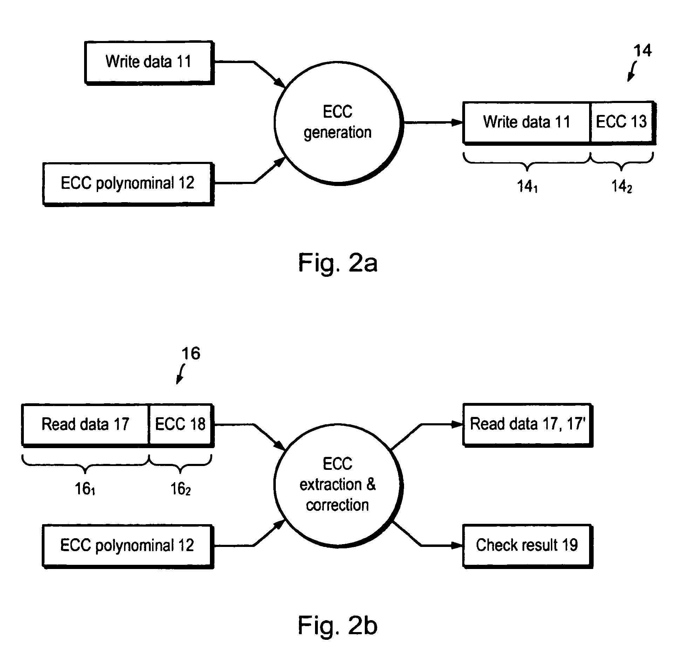

Figure 2 illustrates the peripheral RAM and the ECC circuit 7 in more detail.

The ECC circuit 7 can be generally divided into two sections 8, 9, namely an ECC generation circuit 8 and an ECC extraction and correction circuit 9. The ECC circuits 8, 9 are controlled through a bus system (or "access interface") 10 including data, address and control buses.

Referring to Figures 2 and 2a, the ECC generation circuit 8 receives data 11 from a peripheral module 3 (Figure 1) to be written into RAM 5. Herein, such data is referred to as "write data". Using an ECC polynomial 12, the ECC generation circuit 8 generates an ECC 13 and outputs ECC write data 14 comprising, in a first part 14₁, the write data 11 and, in the second part 14₂, the ECC 13. The ECC write data 14 is transmitted via a write path (not shown) and stored in RAM 5.

In this example, the first and second parts 14₁, 14₂ of the ECC write data 14 correspond to upper bits (i.e. most significant bits) and lower bits respectively of concatenated ECC write data 14. Thus, the write data 11 occupies upper bits of the ECC write data 14 and the ECC 13 occupies the lower bits of the ECC write data 14.

Referring to Figures 2 and 2b, the ECC extraction and correction circuit 9 retrieves ECC read data 16 which includes data 17 (herein referred to as "read data") and an ECC 18 from RAM 5. The ECC extraction and correction circuit 9 uses the same ECC polynomial 12 to extract and output read data 17 and to output a check result 19 to the access interface 10. If necessary, the ECC extraction and correction circuit 9 may correct corrupted read data 17 and output corrected read data 17'. The ECC circuit 7 can help to protect against permanent and transient faults in RAM 5. However, the ECC circuit 7 may itself be prone to faults.

Single, permanent stuck-at faults in the ECC generation circuit 8 or write data path (not shown) requires the ECC extraction and correction circuit 9 to correct error(s) each time data is read from peripheral RAM 5. In some instances, the memory system may still be able to operate correctly. However, if read data is corrected each time RAM is accessed, then the ECC extraction and correction circuit 9 will return a "read with correction" status each time. In other instances, depending on the fault in the ECC generation circuit 8 or write data path (not show), the fault may go unnoticed and/or it may not be possible to correct the error. In this case, the ECC extraction and correction circuit 9 outputs corrupted data to the read interface.

Single, permanent stuck-at faults the read data path (not shown) requires the ECC extraction and correction circuit 9 also to correct error(s) each time data is read from RAM 5. As long as no additional error occurs, the system may still be able to operate correctly. However, if read data is corrected each time RAM is accessed, then the ECC extraction and correction circuit 9 will return a "read with correction" status each time read access results.

Single, permanent stuck-at faults in the ECC extraction and correction circuit 9 can make it impossible to read out uncorrupted data from RAM 5.

To minimise or prevent such permanent faults from disturbing operation of the memory system, RAM and data path checks can be executed during an initialization phase of the system.

As explained earlier, peripheral RAM 5 may not be directly accessible by the CPU 2. A peripheral module 3 accesses the peripheral RAM 5 either directly or, in case of shared accesses, through an arbitration circuit 6. In such systems, RAM and data patch checks are realized by bypassing peripheral module 3 and access arbitration module 6 to give the CPU 2 autonomous or high priority access rights to RAM. Such access privileges cannot be given to the CPU 2 when the peripheral module 3 is operational and requires high speed and deterministic response time from the peripheral RAM 5.

The present invention seeks to ameliorate this problem.

### Microcontroller 21

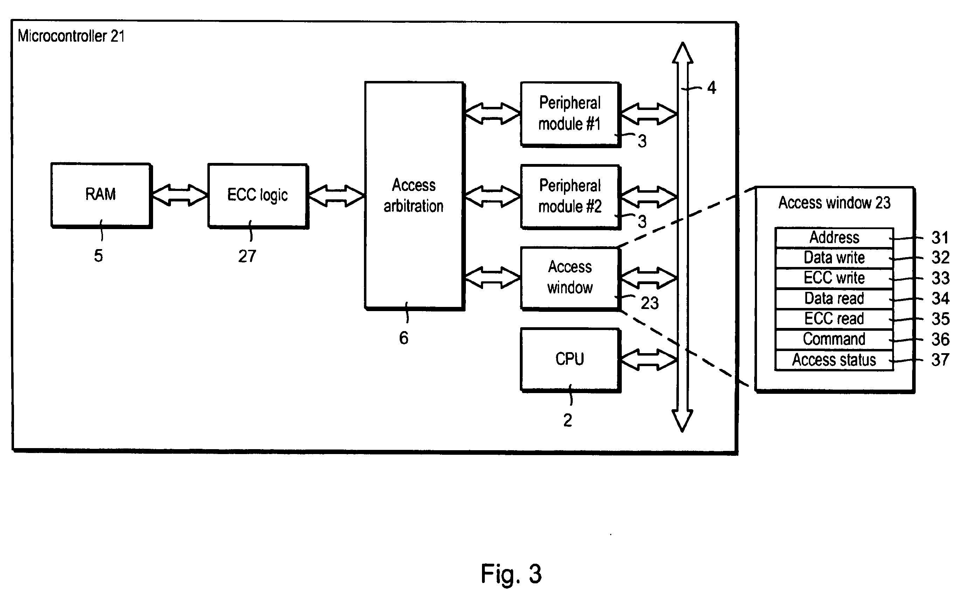

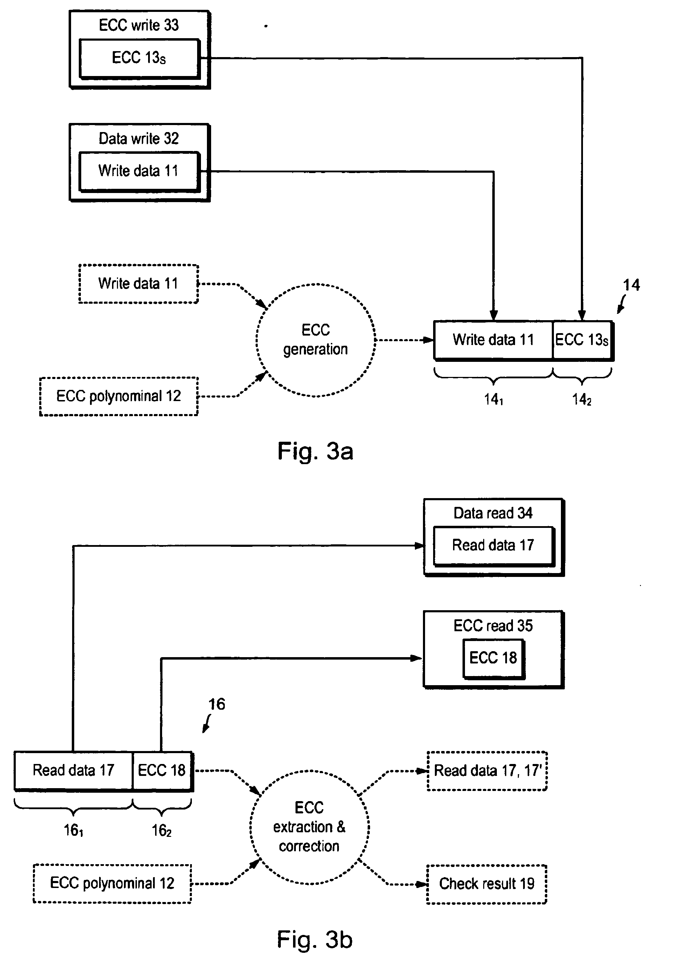

Figure 3 shows a microcontroller 21 having embedded peripheral RAM in accordance with the present invention.

The microcontroller 21 is the same as the microcontroller 1 (Figure 1) described earlier, but differs in two main respects.

Firstly, the microcontroller 21 includes an access window circuit 23 that can be accessed by the CPU 2 via the access interface 4. The access window circuit 23 is a peripheral module. The access window circuit 23 is operationally connected to the access arbitration circuit 6. The access arbitration circuit 6 preferably grants the access window circuit 23 access to the peripheral RAM 5 with a priority level or scheduling mechanism which does not impact the operation of the peripheral modules 3. The peripheral modules 3 may need to be modified to accommodate for the additional access bandwidth required by the access window circuit 23.

Secondly, a modified ECC circuit 27 is used, which will be described in more detail later.

### Access window circuit 23

Referring still to Figure 3, the access window circuit 23 includes an address field 31, a data write field 32, an ECC write field 33, a data read field 34, an ECC read field 35, a command field 36 and an access status field 37.

### -Address 31-

The address field 31 can be written and read by the CPU 2. The address field 31 specifies the address, in RAM 5, that the CPU 2 wants to access.

### -Data write 32-

The data write field 32 can also be written and read by the CPU 2.

Referring also to Figure 3a, the CPU 2, through the use of the data write field 32, can specify the contents of the first portion 14₁ of ECC write data 14 written to peripheral RAM 5 so as to ensure, as far as possible, that the first portion 14₁ of the ECC write data 14 contains known write data 11. This allows the CPU 2 to identify whether there is a fault in, among other things, the ECC generation circuit 8.

If the CPU 2 sets the command field 36 to 'write_automatic', then the write data 11 contained in the data write field 32 is supplied to the ECC generation circuit 8 for ECC generation as described earlier.

However, if the CPU 2 sets the command field 36 to 'write_ecc', then the write data 11 contained in the data write field 32 is placed directly in the first portion 14₁ of the ECC write data 14. Write data 11 preferably bypasses the ECC generation circuit 8.

### -ECC write 33-

The ECC write field 33 can also be written and read by the CPU 2.

The CPU 2, through the use of ECC write field 33, can specify the contents of the second portion 14₂ of ECC write data 14 (i.e. the part containing the ECC) written into the peripheral RAM 5. This allows the CPU 2 to specify a substitute ECC 13_{S} in the ECC write data 14. Again, this allows the CPU 2 to identify whether there is a fault in the ECC generation circuit 8.

If the CPU 2 sets the command field 36 to 'write_automatic', then the CPU 2 need not set the ECC write field 33 since its contents can be ignored.

However, if the CPU 2 sets the command field 36 to 'write_ecc', then substitute ECC 13_{S} held in the ECC write field 34 is placed directly in the second portion 14₂ of the ECC write data 14.

The CPU 2 can generate the substitute ECC 13_{S} using the same ECC polynomial 12 as used by the ECC generation circuit 8. However, the CPU 2 can intentionally introduce one or more artificial bit errors.

### -Data read 34-

The data read field 34 can be written and read by the CPU 2.

Referring also to Figure 3b, the CPU 2, through the use of the data read field 34, can inspect the contents of the first portion 16₁ of ECC read data 16 read out from the peripheral RAM 5. This allows the CPU 2 to identify whether there is a fault in the ECC extraction and correction circuit 9.

If the CPU 2 sets the command field 36 to 'read_data', then read data 17 (or corrected read data 17') is output from the ECC circuit 7 in the manner described earlier.

However, if the CPU 2 sets the command field 36 to 'read_raw_data', then read data 17 from the first portion 16₁ of ECC read data 16 is read out from RAM 5, is output from the ECC circuit 7 and placed in the data read field 34 in the access window circuit 23. The read data 17 preferably bypasses the ECC extraction and correction circuit 9.

### -ECC read 35-

The ECC read field 35 can be written and read by the CPU.

The CPU 2, through the use of the ECC read field 35, can inspect the contents of the second portion 16₂ of ECC read data 16 read out from RAM 5. This allows the CPU 2 to identify whether there is a fault in the ECC extraction and correction circuit 9

If the CPU sets the command field 36 to 'read_data', then the ECC 18 found in the second portion 16₂ of ECC read data 16 can be read out from the peripheral RAM 5, be output by the ECC circuit 7 and be placed in the ECC read field 35 in the access window circuit 23. In this case, the ECC 18 may pass through the ECC extraction and correction circuit 9

Similarly, if the CPU 2 sets the command field 36 to 'read_raw_data', then the ECC 18 in the second portion 16₂ of ECC read data 16 is read out from RAM 5, is output from the ECC circuit 7 and is placed in the ECC read field 35 in the access window circuit 23. Preferably the ECC 18 bypasses the ECC extraction and correction circuit 9.

### -Command 36-

The command field 36 can be written and read by the CPU.

The command field 36 specifies peripheral RAM access mode. The following commands can be provided, namely 'write_automatic', 'write_ecc', 'read_data' and `read raw data'.

In 'write_automatic' mode, the access arbitration circuit 6 writes write data 11 held in the data write field 32 to the peripheral RAM 5 at the address specified in the address field 31. The ECC 13 is calculated by the ECC circuit 7.

In 'write_ecc' mode, the access arbitration circuit 6 writes write data 11 held in the data write field 32 and ECC 11_{S} held in the ECC write field 32 to peripheral RAM 5 at the addresses specified in the address field 31. Data and ECC are written together and so a single address can be used. During writing, however, the ECC generation circuit 8 is bypassed.

In 'read_data' mode, the access arbitration circuit 6 reads read data 17 or corrected read data 17' from the peripheral RAM 5 at the address given in the address field 31 and stores the data 17, 17' in the date read field 34. The access arbitration circuit 6 can also read the ECC 18 and store the ECC 18 in the ECC read field 35 in the access window circuit 23.

In 'read_raw_data' mode, the access arbitration circuit 6 reads ECC read data 16 from the peripheral RAM 5 at the addresses given in the address field 31. The ECC read data 16 is not provided to the ECC extraction and correction logic 9 and no error correction take place. Instead, the read data 17 and the ECC 18 are stored in the data read field 34 and ECC read field 35 respectively.

### -Access status 37-

The access window circuit 23 holds an access status indication field 23 than can be written and read by the CPU.

The access status indication field 37 holds status information about the last access window command field 36. The following status codes can be provided, namely 'busy', 'write OK', 'read OK', 'read corrected', 'read uncorrected' and 'read raw OK'. It will be appreciated that the status codes can be expressed numerically.

The status code 'busy' indicates that execution of the access command has not yet been completed. While the previous command is still being executed, the access window 23 does not accept any new commands.

The status code 'write OK' indicates that execution of the access command has been completed and that data was written into RAM 5.

The status code 'read OK' indicates that execution of the access command has been completed, that data was read from the peripheral RAM 5 and that the data was not corrected. The read data is placed in the data read and ECC read fields 34, 35.

The status code 'read corrected' indicates that execution of the access command has been completed, that data was read from the peripheral RAM 5 and that the data was successfully corrected. The corrected read data is provided in the data read and ECC read fields 34, 35.

The status code 'read uncorrected' indicates that execution of the access command has been completed, that data was read from the peripheral RAM 5 and that an unsuccessful attempt was made to correct the data. The data found in the data read field and ECC read fields 34, 35 is the result of the unsuccessful correction attempt.

Finally, the status code 'read raw OK' indicates that execution of the access command has completed. Data read from the peripheral RAM 5 is placed in the data read field and ECC read fields 34, 35. The ECC check and correction circuit 9 was bypassed.

The fields 31, 32, 33, 34, 35, 36, 37 in the access window circuit 23 can be written and read by the CPU 2. This allows the CPU 2 to confirm that the fields 31, 32, 33, 34, 35, 36, 37 are correctly set and updated by the access window circuit 23.

The CPU 2 can use the provided fields 31, 32, 33, 34, 35, 36, 37 to check the ECC code generation logic 8 and ECC extraction and correction logic 9 during operation time. Operation of the peripheral module(s) 3 connected to the peripheral RAM 5 is (are) not influenced when the CPU 2 uses addresses which are not used by the peripheral module(s) 3.

The ECC extraction and correction circuit 8 generates a check result indication of read accesses. An intentionally-wrong ECC 13_{S} can be written to the peripheral RAM 5 which can be used to test the control path of the ECC status flagging of peripheral modules.

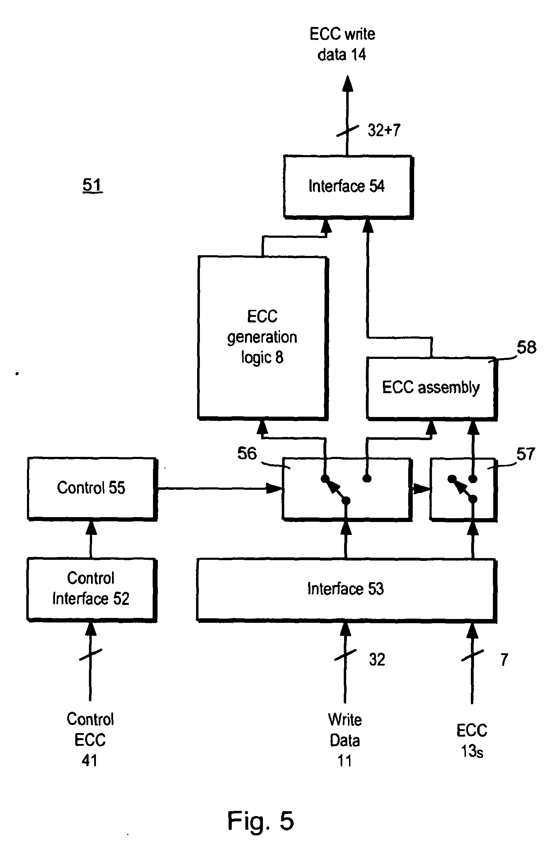

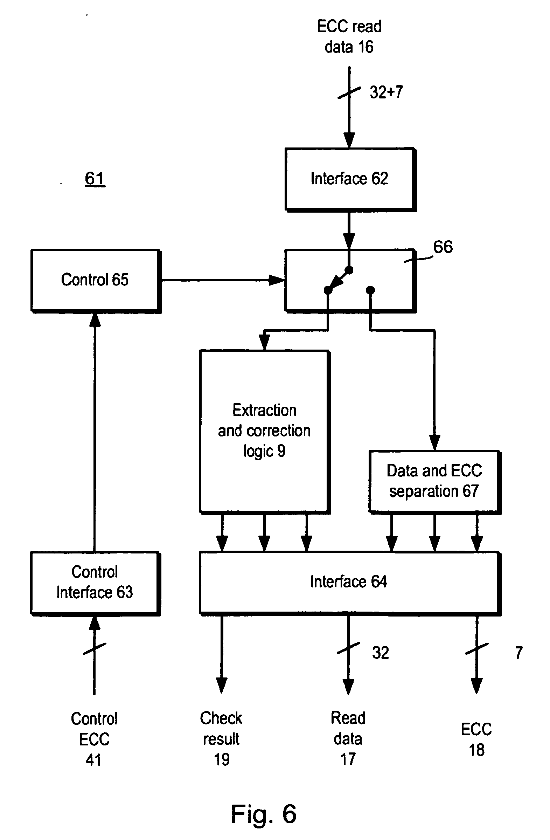

Figures 5 and 6 illustrate respective writing and reading portions 51, 61 of the ECC logic circuit 27.

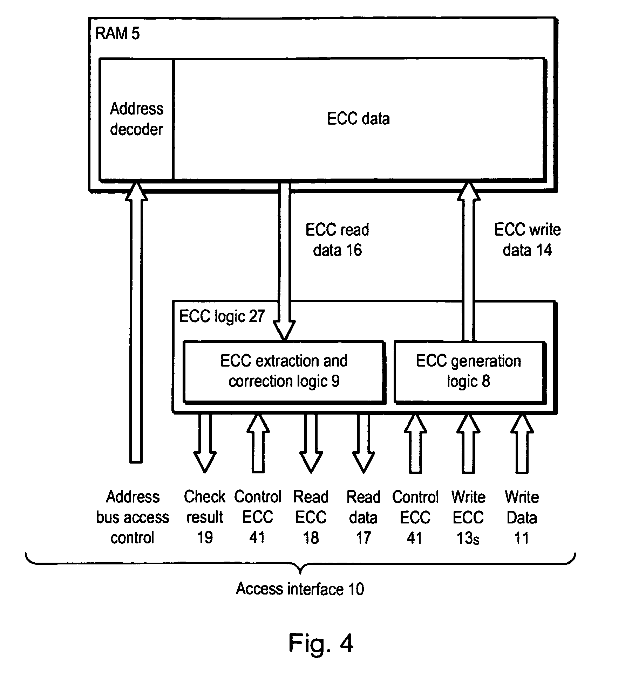

Referring to Figures 4 and 5, the writing portion 51 of the ECC circuit 27 includes first and second input interfaces 52, 53 and an output interface 54.

The first input interface 52 receives a control ECC command 41 which indicates whether ECC generation should be bypassed. The command 41 is passed to control logic 55 which evaluates the command 41. The control logic 51 controls a first switch 56 and an optional second switch 57.

The first switch 56 is configured to switch write data 11 between the ECC generation logic circuit 8 and an ECC write data assembly circuit 58. The second switch 57 can be used to control whether or not substitute ECC 13_{S} is passed to the ECC write data assembly logic circuit 58.

As shown in Figure 5, when the first and second switches 56, 57 are in respective first positions, write data 11 is directed to the ECC generation circuit 8. The ECC generation circuit 8 outputs ECC write data 14 to the output interface 54 which is written into RAM 5.

When the first and second switches are in respective second positions (not shown), write data 11 and the substitute ECC 13_{S} are passed to the ECC write data assembly logic circuit 58. Here, write data 11 and the substitute ECC 13_{S} are assembled into ECC write data 14 and passed to output interface 54. The ECC write data 14 is then written to RAM 5. In this way, the ECC generation circuit 8 is completely bypassed.

Referring to Figures 4 and 6, the reading portion 61 of the ECC logic circuit 27 includes first input interface 62, a second input interface 63 and an output interface 64.

The first input interface 62 which receives ECC read data 16 from the RAM 5. The second input interface 63 receives a control ECC command 41 which indicates whether ECC extraction and correction should be bypassed. The command 41 is passed to control logic 65 which evaluates the command 41. The control logic 65 controls a switch 66.

The switch 66 is configured to switch the flow of ECC read data 16 between the ECC extraction and correction logic 9 and a separation circuit 67.

As shown in Figure 6, when the switch 66 is in a first position, the ECC read data 16 is directed to the ECC extraction and correction circuit 9. The ECC extraction and correction circuit 9 outputs read data 17 or corrected read data 17', a check result 19 and, optionally, ECC 18.

When the switch 66 is in a second position (not shown), ECC read data 16 is passed to the separation circuit 67. ECC read data 16 is split into read data 17 and ECC 18 and provided to the access interface 10. In this way, the extraction and correction circuit 9 can be completely bypassed.

Referring again to Figure 3, the access window circuit 23 and ECC circuit 27 affords greater control to the CPU 2 to test the peripheral RAM 5 and the ECC circuit 27 while minimising the impact on peripheral modules 3. The test can be conducted without requiring the peripheral modules 3 to be switched into a special operation mode.

### Microcontroller 71

Figure 7 shows a peripheral RAM module 70 and microcontroller 71 in accordance with the present invention.

The microcontroller 71 is the same as the microcontroller 21 (Figure 3) described earlier, but differs in that an external RAM module 70 carries RAM 5 and the ECC circuit 27, in other words, the RAM 5 is not embedded in the microcontroller.

Notwithstanding this, the microcontroller 71 may also include RAM and ECC logic.

### E CC write data 14 and E CC read data 16

In the embodiments hereinbefore described, ECC data (i.e. ECC read data or ECC write data) comprises a concatenation of the data (i.e. read data or write data) and a corresponding ECC. However, the data and the ECC need not be concatenated.

For example, as shown in Figures 8a, the ECC write data 14 may take the form of a merged data unit (herein referred to as ECC-encoded write data 11') in which write data 11 and ECC are merged.

Likewise, as shown in Figures 8b, the ECC read data 16 may take the form of a merged data unit (herein referred to as ECC-encoded read data 17') in which read data 17 and ECC 13 are merged.

In the case where data and ECC are merged, the CPU 2 (Figure 3), access window 23 (Figure 3) and ECC circuit 27 may exchange data and ECC in merged form, i.e. encoded write data 11' and encoded read data 17' rather than in separate units, i.e. write data 11 and substitute ECC 13_{S}, and read data 17 and ECC 18. Accordingly, the data write and ECC write fields 32, 33 in the access window 23 may be merged. Likewise, the data read and ECC read fields 34, 35 can be merged.

It will be appreciated that many modifications may be made to the embodiments hereinbefore described.

In the embodiments hereinbefore described, the microcontroller is provided with embedded peripheral RAM. However, the peripheral RAM need not be embedded, that is, the peripheral RAM may be provided as an external module, for example, on a separate chip. The ECC circuit may be included in the module. The RAM need not be peripheral RAM.

A longer or shorter (read or write) data word can be used, for example 16-bit words or 64-bit words. A longer or shorter ECC can be used, e.g. 8-bit or longer ECC can be used.

## Claims

1. Apparatus comprising:
an error correction code (ECC) circuit (27) comprising:
an ECC generation circuit (8) operable to receive data (11), to generate an ECC (13) in dependence upon the data and to output ECC data (14) comprising the data and the ECC, wherein the ECC circuit is selectively operable to receive substitute ECC data and to output ECC data (14) comprising a substitute ECC (13s), and
a data extraction circuit (9) operable to receive ECC data (16) comprising data (17) and an ECC (18), to extract the data or corrected data (17') from the ECC data and to output the data or corrected data, wherein the ECC circuit is selectively operable to receive ECC data and to output the ECC; and
at least one central processing unit (CPU) (2)
**characterised by**
an access circuit (23) for controlling the ECC circuit (27) which is a peripheral module, which is accessible by the CPU (2) and which comprises:
a field (32) for holding data (11) to be written to a memory (5);
a field (33) for holding a substitute ECC (13_{S}) to be written to memory;
a field (34) for holding data (17) to be read from memory (5); and
a field (35) for holding an ECC (18) read from memory;
wherein the fields are writable and readable by the CPU (2) and wherein the access circuit is configured to send the data to be written to memory and the substitute ECC to the ECC circuit and to instruct the ECC circuit to store the substitute ECC in memory and to send an instruction (41) to the ECC circuit to send the data read from memory and the ECC read from memory to the access circuit;
at least one other peripheral module (3); and
a memory access arbitration circuit (6) connected to the access circuit (23) and the at least one other peripheral module (3), wherein the arbitration circuit is configured to handle access scheduling and buffer data during read and write access.

2. Apparatus according to claim 1, wherein the ECC data (14, 16) comprises a first portion (14₁, 16₁) comprising the data (11, 17) and a second portion (14₂, 16₂) comprising the ECC (13, 18).

3. Apparatus according to claim 2, wherein the first and second portions (14₁, 16₁, 14₂, 16₂) are concatenated.

4. Apparatus according to any preceding claim, further comprising:
memory (5) for storing the ECC data.

5. Apparatus according to any preceding claim which conforms to an in-vehicle networking standard.

6. Apparatus according to any preceding claim, which is a microcontroller.

## Patentansprüche

1. Vorrichtung, die Folgendes umfasst:
eine Fehlerkorrekturcode(ECC)-Schaltung (27), die Folgendes umfasst:
eine ECC-Erzeugerschaltung (8), die betreibbar ist, um Daten (11) zu empfangen, um einen ECC (13) in Abhängigkeit von den Daten zu erzeugen und die Daten und den ECC umfassende ECC-Daten (14) auszugeben, wobei die ECC-Schaltung selektiv betreibbar ist, um Ersatz-ECC-Daten zu empfangen und einen Ersatz-ECC (13s) umfassende ECC-Daten (14) auszugeben, und
eine Datenauszugsschaltung (9), die betreibbar ist, um Daten (17) und einen ECC (18) umfassende ECC-Daten (16) zu empfangen, um die Daten oder korrigierten Daten (17') aus den ECC-Daten auszuziehen und um die Daten oder korrigierten Daten auszugeben, wobei die ECC-Schaltung selektiv betreibbar ist, um die ECC-Daten zu empfangen und den ECC auszugeben; und
mindestens eine zentrale Verarbeitungseinheit (CPU) (2);
**gekennzeichnet durch**
eine Zugriffsschaltung (23) zum Steuern der ECC-Schaltung (27), bei der es sich um ein Peripheriemodul handelt, auf das von der CPU (2) zugegriffen werden kann und das Folgendes umfasst:
ein Feld (32) zum Enthalten von in einen Speicher (5) zu schreibenden Daten (11);
ein Feld (33) zum Enthalten von einem in einen Speicher zu schreibenden Ersatz-ECC (13s);
ein Feld (34) zum Enthalten von aus einem Speicher (5) auszulesenden Daten (17); und
ein Feld (35) zum Enthalten eines aus einem Speicher ausgelesenen ECC (18);
wobei die Felder von der CPU (2) beschreibbar und lesbar sind und wobei die Zugriffsschaltung dazu ausgebildet ist, die in einen Speicher zu schreibenden Daten und den Ersatz-ECC zu der ECC-Schaltung zu schicken und die ECC-Schaltung anzuweisen, den Ersatz-ECC in einem Speicher zu speichern und eine Anweisung (41) an die ECC-Schaltung zu schicken, die aus dem Speicher ausgelesenen Daten und den aus dem Speicher ausgelesenen ECC zu der Zugriffsschaltung zu schicken;
mindestens ein anderes Peripheriemodul (3); und
eine Speicherzugriffs-Arbitrierungsschaltung (6), die mit der Zugriffsschaltung (23) und dem mindestens einen anderen Peripheriemodul (3) verbunden ist, wobei die Arbitrierungsschaltung dazu ausgebildet ist, während des Schreib- und Lesezugriffs die Zugriffszeitvergabe zu handhaben und Daten zwischenzuspeichern.

2. Vorrichtung nach Anspruch 1, wobei die ECC-Daten (14, 16) einen die Daten (11, 17) umfassenden ersten Abschnitt (14₁, 16₁) und einen den ECC (13, 18) umfassenden zweiten Abschnitt (14₂, 16₂) umfassen.

3. Vorrichtung nach Anspruch 2, wobei der erste und der zweite Abschnitt (14₁, 16₁, 14₂, 16₂) zusammenhängend sind.

4. Vorrichtung nach einem der vorangehenden Ansprüche, die weiter Folgendes umfasst:
einen Speicher (5) zum Speichern der ECC-Daten.

5. Vorrichtung nach einem der vorangehenden Ansprüche, die einem In-Vehicle-Vernetzungsstandard entspricht.

6. Vorrichtung nach einem der vorangehenden Ansprüche, bei der es sich um einen Mikrokontroller handelt.

## Revendications

1. Appareil comprenant :
un circuit (27) de code de correction d'erreur (CCE) comprenant :
un circuit de génération de CCE (8) qui peut être activé pour recevoir des données (11), pour générer un CCE (13) en fonction des données et pour délivrer en sortie des données CCE (14) comprenant les données et le CCE, ledit circuit de CCE pouvant être activé sélectivement pour recevoir des données CCE de substitution et pour délivrer en sortie des données CCE (14) comprenant un CCE de substitution (13s), et
un circuit d'extraction de données (9) qui peut être activé pour recevoir des données CCE (16) comprenant des données (17) et un CCE (18), pour extraire les données ou des données corrigées (17') à partir des données CCE et pour délivrer en sortie les données ou données corrigées, ledit circuit de CCE pouvant être activé sélectivement pour recevoir des données CCE et pour délivrer en sortie le CCE ; et
au moins une unité centrale (UC) (2) ;
**caractérisé par**
un circuit d'accès (23), servant à contrôler le circuit de CCE (27), qui est un module périphérique auquel l'UC (2) peut accéder et qui comprend :
un champ (32) destiné à contenir des données (11) à écrire dans une mémoire (5) ;
un champ (33) destiné à contenir un CCE de substitution (13_{S}) à écrire dans la mémoire ;
un champ (34) destiné à contenir des données (17) à lire dans la mémoire (5) ; et
un champ (35) destiné à contenir un CCE (18) lu dans la mémoire ;
lesdits champs étant inscriptibles et lisibles par l'UC (2) et le circuit d'accès étant configuré pour envoyer les données à écrire à la mémoire et le CCE de substitution au circuit de CCE, pour commander au circuit de CCE de stocker le CCE de substitution dans la mémoire et pour envoyer au circuit de CCE une instruction (41) d'envoi au circuit d'accès des données lues dans la mémoire et du CCE lu dans la mémoire ;
au moins un autre module périphérique (3) ; et
un circuit d'arbitrage d'accès à la mémoire (6) connecté au circuit d'accès (23) et à ou aux autres modules périphériques (3), ledit circuit d'arbitrage étant configuré pour gérer la chronologie d'accès et tamponner les données pendant l'accès en lecture et en écriture.

2. Appareil selon la revendication 1, dans lequel les données CCE (14, 16) comprennent une première partie (14₁, 16₁) comprenant les données (11, 17) et une seconde partie (14₂, 16₂) comprenant le CCE (13, 18).

3. Appareil selon la revendication 2, dans lequel les premières et secondes parties (14₁, 16₁, 14₂, 16₂) sont chaînées.

4. Appareil selon l'une quelconque des revendications précédentes, comprenant en outre :
une mémoire (5) servant à stocker les données CCE.

5. Appareil selon l'une quelconque des revendications précédentes, répondant à une norme de réseau embarqué sur un véhicule.

6. Appareil selon l'une quelconque des revendications précédentes, qui est un microcontrôleur.
